Europäisches Patentamt

European Patent Office

Office européen des brevets

(19)

(11) Publication number: **0 018 845**
**B1**

# (12) EUROPEAN PATENT SPECIFICATION

(45) Date of publication of patent specification: **18.01.84**

(51) Int. Cl.³: **H 04 M 9/02**

(21) Application number: **80301459.6**

(22) Date of filing: **02.05.80**

(54) Data handling circuits.

(30) Priority: **04.05.79 GB 7915674**
**04.05.79 GB 7915673**

(43) Date of publication of application:
**12.11.80 Bulletin 80/23**

(45) Publication of the grant of the patent:
**18.01.84 Bulletin 84/3**

(84) Designated Contracting States:
**BE CH DE FR IT LI NL SE**

(56) References cited:
**FR - A - 2 376 578**
**GB - A - 1 401 369**
**US - A - 3 789 154**

**COLLOQUE INTERNATIONAL DE
COMMUTATION ELECTRONIQUE, March 28/
April 2, 1966, PARIS (FR) G. LESTRAT et al.:
"Programmation de l'autocommutateur
artemis", pages 1424 to 1429**

(73) Proprietor: **The General Electric Company, p.l.c.
1 Stanhope Gate
London W1A 1EH (GB)**

(72) Inventor: **Stevenson, Robert Andrew
3 Colburn Avenue Byerley Park
Newton Aycliffe County Durham (GB)**

(74) Representative: **Dolwin, John Davison
Central Patent Department The General Electric
Company plc Hirst Research Centre East Lane
Wembley Middlesex HA9 7PP (GB)**

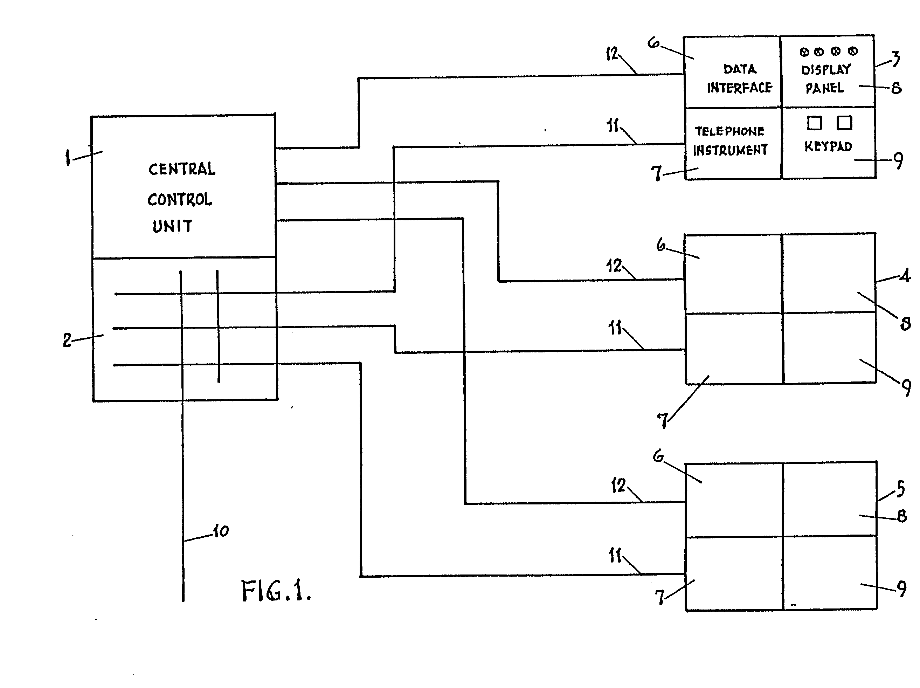

(56) References cited:
**The Book "Programming Electronic Switching
Systems - real-time aspects and their language
implications" by HILLS and KANO, published by
Peregrinus Ltd. Stevenage, GB in 1976, pages 9
(fig. 1,5), and 34-37 (sections 2.4 to 2.4.2)
The Book "Rechnergesteuerte
Vermittlungssysteme" by Gerke, published by
the Springer-Verlag, Berlin, Heidelberg, New
York, DE/US in 1972, pages 116-121 (section
7.2.1)**

Courier Press, Leamington Spa, England.

Data Handling Circuits.

This invention relates to data handling circuits and, in particular but not exclusively, to such circuits used to receive bursts of data pulses from data processing devices in telephone apparatus.

In telephone apparatus comprising a central control unit and a number of associated telephone stations, the telephone stations are often quiescent for long periods between calls. It is, however, necessary for the central control unit to respond quickly to any change occurring at any one of the telephone stations. It is therefore desirable for each telephone station to be continuously monitored and for data relating to changes occurring at the telephone stations to be communicated to the central control unit within a reasonable period of time.

In many telephone systems the central control unit is arranged to scan the speech pairs of the telephone stations at periodic intervals. For example in the book Programming Electronic Switching Systems by Hills & Kano published by Peter Peregrinus Ltd. for the I.E.E. line scanning is carried out at a 100 ms rate, see page 34, section 2.4.

Line scanning is only one of the functions which the central control unit must carry out. For example it may be necessary for data to be transferred to the telephone station from time to time, particularly in small exchanges of the kind known as Private Automatic Branch Exchanges such data is used to indicate the availability of exchange lines and the like.

Thus data lines from the central control unit must be monitored by the telephone stations for the receipt of bursts of data pulses.

It is an object of the present invention to provide a data handling circuit for receiving bursts of data pulses from a central control unit which is adapted to monitor data lines and to provide accurate data timing without continuously scanning the data lines.

According to the present invention in a data handling circuit for handling bursts of data pulses each of which is in the form of a prefix pulse followed by a plurality of data pulses and in each of which the prefix pulse is maintained for a longer duration than one of said data pulses, said data handling circuit including means for receiving said bursts of data pulses, an input of said receiving means is sampled at a first periodic rate which is substantially slower than the rate of transmission of the data pulses, on detection of a prefix pulse of one of said bursts of pulses said input is sampled at a second periodic rate which is substantially higher than the rate of transmission of the data pulses and on detection of a data pulse of said one of said bursts of pulses said input is sampled at a third periodic rate which is substantially the same as the rate of transmission of the data pulses.

One example of telephone apparatus including a data handling device in accordance with the present invention will now be described with reference to the accompanying drawings of which:—

Figure 1 shows the apparatus in block diagram form,

Figure 2 shows a part of Figure 1 in greater detail, and

Figure 3 shows waveforms illustrating the operation of a data interface and central control unit of Figure 1.

Referring first to Figure 1 there is shown telephone apparatus comprising a central control unit 1, a concentrator 2 and three telephone stations 3, 4 and 5. Each of the telephone stations 3, 4 and 5 comprises a data handling circuit or data interface 6, a telephone instrument 7, a display panel 8 and a keypad 9. Each telephone instrument 7 has access via a respective speechpair 11 and the concentrator 2 to an exchange line 10 under control of the central control unit 1.

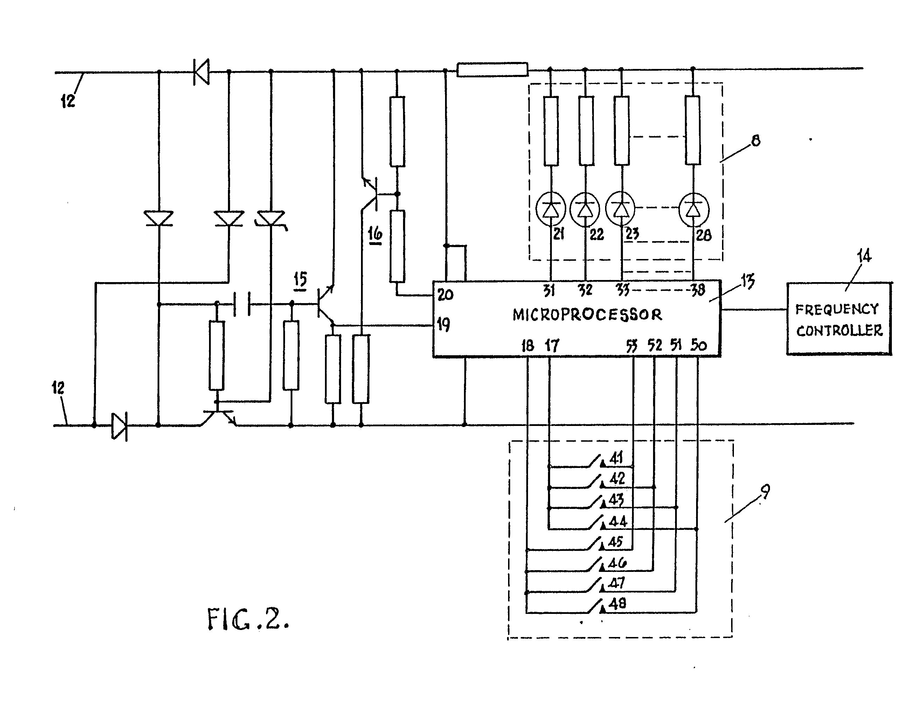

Referring also to Figure 2, each data interface 6 comprises a microprocessor 13 the speed of operation of which is controlled by a frequency controller 14, an input buffer circuit 15 and an output buffer circuit 16.

The microprocessor 13 receives data from the central control unit 1 via a respective data pair 12 and the input buffer circuit 15. The received data is used by the microprocessor 13 to determine which, if any, of a set of lamps or light emitting diodes 21 ... 28 shall be illuminated. An audible alarm (not shown) may also be controlled in similar manner.

The microprocessor also detects which, if any, of contacts 41 to 48 of keys or switches of the keypad 9 are operated and stores data relating to the operation of these keys in an internal memory (not shown). The data relating to the operation of the keys is transmitted via the output buffer 16 and the data pair 12 to the central control unit 1 after receipt of the data from the central control unit 1. One of the contacts 41 to 48 may in practice be contacts of the switchhook of the associated telephone instrument 7.

When no data interchange is occurring between the central control unit 1 and the data interface 6, the microprocessor 13 scans the contacts 41 to 48 of the keypad 9 to determine which, if any, of the keys are operated: the microprocessor 13 applies a signal to each of the outputs 50 to 53 in sequence and examines inputs 17 and 18 for the return of the signal. If, for example, only the key associated with the contacts 42 were operated then a signal on output 52 would appear at input 17 only. Signals on outputs 50, 51 and 53 would not appear at either of the inputs 17, 18. On completion of the scanning of the keypad 9, the microprocessor 13 samples input 19 to determine whether a

burst of data is about to be received from the central control unit 1. This is indicated by a prefix pulse, which is a change in the binary state of the input 19 and which precedes the burst of data. If this prefix is not present the microprocessor 13 returns to scanning the keypad 9 as previously described.

If a prefix pulse is present at the input 19, the microprocessor 13 ceases scanning the keypad 9 and takes repeated samples of input 19 until a further change in the binary state of that input 19 indicates the conclusion of the prefix and the commencement of the start bit of the incoming burst of data. The microprocessor 13 now alters its rate of sampling input 19 so that it samples this input at substantially the bit rate of the incoming burst of data.

The microprocessor 13 of each data interface 6 runs under the control of its respective internal clock (not shown) which clock is controlled by a respective frequency controller 14. The respective clock of each microprocessor 13 is arranged such that when data is being received from the central control unit 1 the sampling of the respective input 19 occurs at substantially the same rate as the rate of transmission of the bits by the central control unit 1. This rate is referred to herein as the bit rate. The time taken by the central control unit 1 to transmit one data pulse is referred to as a bit period.

Before the microprocessor 13 takes its first sample of the incoming data stream, that is upon detection of the conclusion of the prefix pulse, it delays for half of one bit period. As the microprocessor 13 is sampling the input 19 at substantially the bit rate this ensures that each bit of the incoming data burst is sampled substantially half way through the respective bit period.

Having received the incoming data burst, the microprocessor 13 delays for approximately two bit periods and then transmits to the central control unit 1 the stored data relating to the operation of contacts 41 to 48.

On completion of the transmission of the stored data, the microprocessor 13 uses the data received from the central control unit 1 to illuminate or extinguish designated lamps of the display panel 8 or to sound or cancel the audible alarm (not shown).

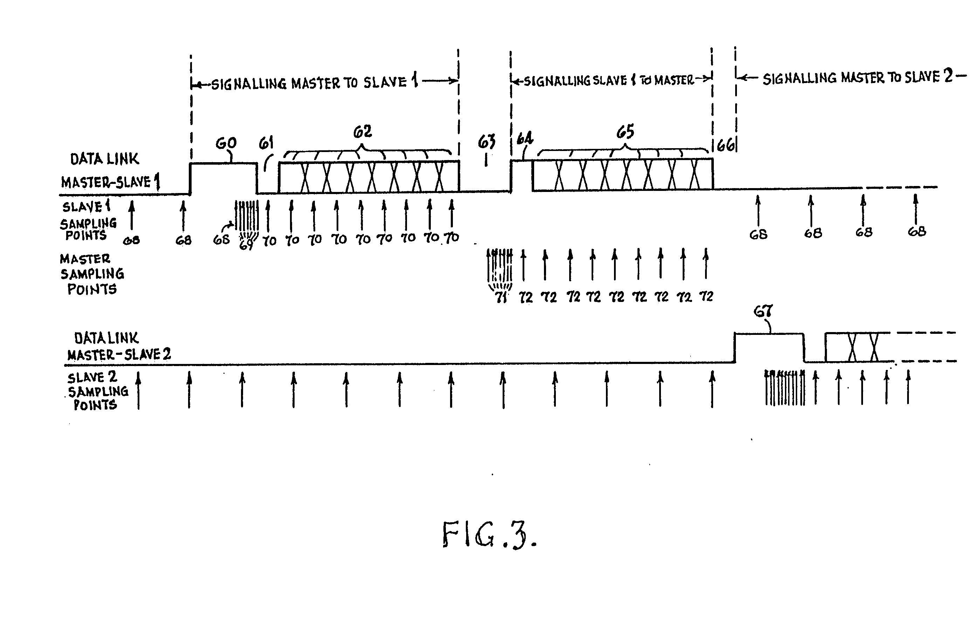

Referring now to Figure 3 the signalling sequence between the central control unit 1 and each of the telephone stations 3, 4 and 5 will now be described in greater detail.

The central control unit 1 scans each respective data pair 12 of the telephone stations 3, 4 and 5 in sequence. When the central control unit 1 commences a scan of the data pair 12 of, for example, the telephone station 3 it causes a signal 60 representing a binary '1' to be applied to the data pair 12. The signal 60, referred to herein as the prefix pulse, is maintained by the central control unit 1 for three bit periods. As previously described the data interface 6 is sampling the data pair 12 at a slow sampling rate of, say, between once every two bit periods and once every 2.75 bit periods, and times at which sampling of the data pair occurs at the slow sampling rate are shown as sampling points 68. Since the prefix 60 is maintained on the data pair 12 for three bit periods, at least one of the sampling points 68 must occur before the prefix 60 is removed. When the prefix 60 is detected by the data interface 6 the sampling rate is increased, as indicated by sampling points 69, to six times the bit rate.

When the three bit periods have elapsed, the central control unit 1 causes a binary '0' signal to be applied to the data pair 12. This signal, referred to as the start bit 61, is maintained by the central control unit 1 for one bit period. The change in the binary state of the data pair 12 is detected by the data interface 6 within onesixth of a bit period and the interface 6 then alters its sampling rate to substantially the bit rate as indicated by sampling points 70.

On completion of the start bit 61 the central control unit 1 causes binary data signals 62 to be applied sequentially to the data pair 12 representing eight data bits. The data signals 62 will be received and stored by the data interface 6 as previously explained.

The central control unit 1 must now receive data relating to the operations of contacts 41 to 48 of the keypad 9 of the telephone station 3. Transmission of this data commences after a period 20 of approximately two bit periods. During this period 20, the central control unit 1 takes repeated samples of the data pair 12 at a rate of approximately six times per bit period, indicated by sampling points 71. The data interface 6 applies a signal 64 representing a binary '1' to the data pair 12 to indicate the start of a burst of data pulses to the central control unit 1 representing the stored data relating to the operation of keys of the keypad 9. The signal 64 is detected by the central control unit 1 which then alters its sampling rate to the bit rate as indicated by sampling points 72. On completion of the start signal 64 the data interface 6 applies binary signals 65 to the data pair representing eight data bits relating to the operation of the keys of the keypad 9. The signals 65 will be received and stored by the central control unit 1.

The central control unit 1 now delays for one bit period 66 and then commences a scan of the respective data pair 12 of the subsequent telephone station 4 by causing a binary '1' signal 67 to be applied to that data pair followed by a respective burst of data for the telephone station 4.

When all of the respective data pairs 12 of the telephone stations 3, 4 and 5 have been scanned in the manner described above the central control unit 1 reacts to the data it has received by for example causing the concentrator 2 to set up a connection between one of the telephone stations 3, 4 and 5 and the exchange line 10. During this period, which is not necessarily of fixed duration no scanning of the data pairs 12 takes place.

When the central control unit 1 has completed all tasks required of it by the data received from the telephone stations 3, 4 and 5 the scanning sequence described above is repeated.

Access to the exchange line 10 from, for example, the telephone station 3 is achieved in the following manner: the handset of the telephone instrument 7 is raised and a key of the respective keypad 9, indicating that connection to exchange line 10 is required, is operated. The raising of the handset and operation of the key is detected by the respective data interface 6 which, when scanned, transfers data relating to these actions to the central control unit 1. On completion of scanning of all of the telephone stations 3, 4 and 5 the central control unit 1 causes the concentrator 2 to set up a connection between the exchange line 10 and the respective speechpair 11 of the telephone instrument 7 of the telephone station 3. Transfer of dial impulses and speech may then take place in known manner.

On its subsequent scan of the telephone stations 3, 4 and 5, the central control unit 1 sends data to the respective data interface 6 of each telephone station indicating to the data interfaces 6 that the exchange line 10 is in use. On receipt of this data, the data interface 6 causes a lamp on its associated display panel 8 to be illuminated, indicating that the exchange line 10 is in use.

When the telephone handset of the telephone station 3 is replaced, this is detected by the associated data interface 6 which signals this information via its respective data pair 12 to the central control unit 1 in the manner previously described. On completion of its scan of the data pairs 12, the central control unit 1 causes the concentrator 2 to release the connection between the exchange line 10 and the respective speech pair 11 of the telephone station 3. On the subsequent scan of the data pairs 12, the central control unit 1 sends data to the respective data interfaces 6 of each telephone station 3, 4 and 5 to cause them to extinguish the lamp indicating that the exchange line 10 is in use.

Other keys on the keypad 9 may, for example, be used, to request connection to one of the other telephone stations or to request that incoming calls are not connected to the respective telephone station associated with that keypad.

Other lamps on the display panel 8 may serve to indicate which, if any, of the telephone instruments 7 is in use or to indicate that calls intended for another of the telephone stations 3, 4 and 5 are being automatically directed to the telephone instrument associated with this display panel.

In a larger system (not shown) of a similar kind to that described above there may be a greater number of telephone stations. The scanning cycle of the central control unit 1 will therefore be longer and in a system including, say, ten such telephone stations the time taken to scan all of the data pairs 12 is of the order of 37.5 milliseconds. Between the scanning of the last of the data pairs and the subsequent scanning of the first of the data pairs there is a period of the order of 25 milliseconds during which the central control unit 1 carries out its control functions. Thus between any one scan of the data pair 12 of the telephone station 3 for example and the next scan thereof, a period of the order of 62.5 milliseconds elapses.

This period of 62.5 milliseconds is longer than the minimum operate and release time of the contacts 41 to 47 of the keys of the keypad 9, which is of the order of 40 milliseconds. Therefore if the data relating to the contacts 41 to 48 is directly communicated to the central control unit 1 a minimum operation of a key of the keypad 9 may be missed.

The microprocessor 13 is arranged to sample the contacts 41 to 48 at intervals much shorter than the minimum operate and release time of those contacts. The microprocessor 13 applies signals in sequence to its outputs 50 to 53 and then determines which, if any, of the contacts 41 to 48 are closed by examination of its inputs 17 and 18. If for example only contacts 44 were closed then a signal applied by the microprocessor 13 to its output 50 would appear at input 17 only. Signals on outputs 51, 52 and 53 would not appear at either of the inputs 17 and 18. On detection of the closure of a set of contacts the microprocessor 13 sets a respective bit in the internal memory (not shown) relating to the set of contacts which have been detected as closed.

The microprocessor 13 continues to scan the contacts 41 to 48 for any further change in condition until a change in the binary state of input 19 indicates receipt of a start signal which precedes the transmission of a burst of data from the central control unit 1.

If the microprocessor detects a further change in the state of a set of contacts before it has transferred data relating to a first change in the state of that set of contacts, the microprocessor does not amend the respective bit in its internal memory until after the transfer of data to the central control unit 1. Data relating to the further change in status of the set of contacts will be transferred to the central control unit 1 on its subsequent scan of the respective data pair 12.

**Claims**

1. A data handling circuit for handling bursts of pulses each of which is in the form of a prefix pulse (60) followed by a plurality of data pulses (61, 62) and in each of which the prefix pulse (60) is maintained for a longer duration than one of said data pulses (61, 62), said data handling circuit (6) including means (13) for receiving said bursts of pulses characterised in that an input (19) of said receiving means (13) is sampled (68) at a first periodic rate which is substantially slower than the rate of transmission of the data pulses (61, 62), on detection of a prefix pulse (60) of one of said bursts of pulses said input (19) is sampled at a second periodic rate (69) which is substantially higher than the rate of transmission of the data pulses, and on detection of a data pulse (61) of said one of said bursts of pulses said input (19) is sampled (70) at a third periodic rate which is substantially the same as the rate of transmission of the data pulses (61, 62).

2. A data handling circuit as claimed in Claim 1 wherein the receiving means (13) is a microprocessor.

3. A data handling circuit as claimed in Claim 2 wherein the microprocessor (13) is also arranged to scan a plurality of variable state means (41—48) at a substantially periodic rate to detect the status thereof and to store data in respect of the detected status of each of said variable state means (41—48) for subsequent transmission over a data path (12) to receiving or control means (1).

4. A data handling circuit as claimed in Claim 3 wherein the microprocessor (13) is arranged to transmit the data stored in respect of the detected status of the variable state means (41—48) in response to one of said bursts of data pulses.

5. A data handling circuit as claimed in Claim 4 wherein the microprocessor (13) is also arranged to inhibit alteration of the data stored in respect of any one of said plurality of variable state means (41—48) if a plurality of changes of status of the respective one of said plurality of variable state means (41—48) occur between successive transmissions of the stored data to the receiving or control means (1).

6. A data handling circuit as claimed in any preceding Claim wherein each burst of data pulses received determines which (if any) of a plurality of electrically operable means (21—28) shall be activated.

7. Telephone apparatus (3) including a data handling circuit (6), said data handling circuit being in accordance with any one of Claims 1 to 6.

**Patentansprüche**

1. Datenbearbeitungsstromkreis zum Bearbeiten von Impulsgruppen von welchen jede einen Vorimpuls (60), gefolgt von einer Anzahl von Datenimpulsen (61, 62), aufweist und in jeder Impulsgruppe der Vorimpuls (60) länger als einer der genannten Datenimpulse (61, 62) andauert, wobei der genannte Datenbearbeitungsstromkreis (6) ein Mittel (13) zum Empfangen der genannten Vorimpulse umfasst, dadurch gekennzeichnet, dass ein Eingang (19) des genannten Empfangsmittels (13) mit einer ersten periodischen Frequenz (68) angetastet wird, die wesentlich kleiner ist als die Taktfrequenz der übertragenen Datenimpulse (61, 62), aufgrund des Feststellens eines Vorimpulses (60) einer der genannten Impulsgruppen wird der genannte Eingang (19) mit einer zweiten periodischen Frequenz (69) abgetastet, die wesentlich höher ist als die Taktfrequenz der Datenimpulse und aufgrund des Festellens eines Datenimpulses (61) der genannten einen der Impulsgruppen wird der genannte Eingang (19) mit einer dritten periodischen Frequenz abgetastet, die im wesentlichen gleich der Taktfrequenz der Datenimpulse ist.

2. Datenbearbeitungsstromkreis nach Anspruch 1, dadurch gekennzeichnet, dass das Empfangsmittel (13) ein Mikroprozessor ist.

3. Datenbearbeitungsstromkreis nach Anspruch 2, dadurch gekennzeichnet, das der Mikroprozessor (13) ausgebildet ist zum Abtasten einer Anzahl von variablen Zustandmitteln (41—48) mit einer im wesentlichen periodischen Frequenz, um den Zustand der Zustandsmittel festzustellen und die Daten über den festgestellten Zustand jedes der Zustandsmittel (41—48) während der nachfolgenden Uebertragung über einen Datenweg (12) zu einem Empfangs- oder Steuermittel (1) zu speichern.

4. Datenbearbeitungsstromkreis nach Anspruch 3, dadurch gekennzeichnet, dass der Mikroprozessor (13) zum Uebertragen der gespeicherten Daten über den Zustand der Zustandsmittel (41—48) in Abhängigkeit eines der genannten Datenimpulse ausgebildet ist.

5. Datenbearbeitungsstromkreis nach Anspruch 4, dadurch gekennzeichnet, dass der Mikroprozessor (13) zum Sperren der Aenderung der gespeicherten Zustandsdaten bezüglich irgend eines der genannten variablen Zustandsmittel (41—48) ausgebildet ist, wenn mehrere Aenderungen des Zustandes eines der genannten Zustandsmittel (41—48) zwischen aufeinanderfolgenden Uebertragungen der gespeicherten Zustandsdaten zum Empfangs- oder Steuermittel (1) auftreten.

6. Datenbearbeitungsstromkreis nach einem der vorangehenden Ansprüche, dadurch gekennzeichnet, dass jeder der empfangenen Datenimpulse bestimmt, welches (wenn überhaupt eines) von einer Anzahl von elektrisch betätigbaren Mitteln (21—28) erregt werden soll.

7. Telephonapparat (3) mit einem Datenbearbeitungsstromkreis (6), der gemäss einem der Ansprüche 1 bis 6 ausgebildet ist.

**Revendications**

1. Circuit de manipulation de données destiné à manipuler des salves d'impulsions chacune sous forme d'une impulsion préfixe (60) suivie de plusieurs impulsions de données (61, 62) et dans chacune desquelles l'impulsion préfixe (60) est maintenue pendant un temps supérieur à la durée de l'une des impulsions de données (61, 62), le circuit de manipulation de données (6) comprenant un dispositif (13) destiné à recevoir les salves d'impulsions, caractérisé en ce qu'une entrée (19) du dispositif de réception (13) est échantillonnée (68) à une première fréquence qui est notablement inférieure à la fréquence de transmission des impulsions de données (61, 62), lors de la détection d'une impulsion préfixe (60) de l'une des salves d'impulsions, l'entrée (19) est échantillonnée à une seconde fréquence (69) qui est sensiblement supérieure à la fréquence de transmission des impulsions de données, et, après détection d'une impulsion de données (61) de ladite salve d'impulsions, l'entrée (19) est échantillonnée (70) à une troisième fréquence qui est sensiblement égale à la fréquence de transmission des impulsions de données (61, 62).

2. Circuit de manipulation de données selon la revendication 1, dans lequel le dispositif de réception (13) est un microprocesseur.

3. Circuit de manipulation de données selon la revendication 2, dans lequel le microprocesseur (13) est aussi réalisé afin qu'il analyse plusieurs dispositifs (41—48) à état variable, de manière sensiblement périodique, afin qu'il détecte leur état, et qu'il mémorise des données relatives à l'état détecté de chacun des dispositifs (41—48) à état variable, puis qu'il les transmette ultérieurement par un trajet de données (12) à un dispositif de réception ou de commande (1).

4. Circuit de manipulation de données selon la revendication 3, dans lequel le microprocesseur (13) est réalisé afin qu'il transmette les données mémorisées relatives à l'état détecté des dispositifs à état variable (41—48) à la suite de l'une des salves d'impulsions de données.

5. Circuit de manipulation de données selon la revendication 4, caractérisé en ce que le microprocesseur (13) est aussi réalisé afin qu'il empêche la modification des données mémorisées relatives à l'un quelconque des dispositifs à état variable (41—48) lorsque plusieurs changements d'état de celui des dispositifs à état variable (41—48) apparaissent entre des transmissions successives des données mémorisées au dispositif de réception ou de commande (1).

6. Circuit de manipulation de données selon l'une quelconque des revendications précédentes, dans lequel chaque salve d'impulsions de données reçues détermine quel dispositif (21—28) manoeuvrable électriquement, choisi parmi plusieurs, doit être excité (le cas échéant).

7. Appareillage téléphonique (3) comprenant un circuit de manipulation de données (6), ledit circuit de manipulation de données étant selon l'une quelconque des revendications 1 à 6.

FIG.1.

CENTRAL
CONTROL
UNIT

DATA
INTERFACE

DISPLAY
PANEL

TELEPHONE
INSTRUMENT

KEYPAD

0 018 845

FIG.2.

8

14
FREQUENCY
CONTROLLER

13

MICROPROCESSOR

9

0 018 845

FIG.3.